# EUROPEAN PATENT SPECIFICATION

(11) **EP 4 230 591 B1**
(45) Date of publication and mention of the grant of the patent: **02.12.2026**
(21) Application number: 21879903.9
(22) Date of filing: 04.10.2021
(51) Int. Cl.: C03B 5/16, C03B 5/02, C03B 5/26

(54) **GLASS PRODUCTION METHOD**
GLASHERSTELLUNGSVERFAHREN
PROCÉDÉ DE PRODUCTION DE VERRE

(30) Priority: 13.10.2020 JP 2020172264
(43) Date of publication of application: 23.08.2023
(73) Proprietor: Nippon Electric Glass Co., Ltd., Otsu-shi, Shiga 520-8639 (JP)
(72) Inventor: NAKATSUKA, Kazuto, Otsu-shi, Shiga 520-8639 (JP); KAGAI, Tsubasa, Otsu-shi, Shiga 520-8639 (JP); ITO, Nobutoshi, Otsu-shi, Shiga 520-8639 (JP)
(74) Representative: Tetzner, Michael
(86) International application number: PCT/JP2021/036557
(87) International publication number: WO 2022/080163

(56) References cited:
- WO-A1-2006/088339
- CN-A- 107 056 016
- CN-A- 108 726 850
- JP-A- 2000 503 378
- JP-A- 2005 154 216
- JP-A- S6 186 426
- JP-A- S60 231 421
- US-A1- 2005 072 191

## Description

The present invention relates to a glass manufacturing method.

### Background Art

In recent years, chalcogenide glasses are known as materials suitable for use in the field of infrared optics. Chalcogenide glasses not only have infrared transmissivity but also can be manufactured by press molding. As such, chalcogenide glasses have excellent mass productivity and cost reduction performance.

JP 4109105 B discloses an example of a manufacturing method of a chalcogenide glass. The manufacturing method describes that glass components in a crucible are heated and melted by radiant heat from a heater, and the melt is stirred by a stir bar.

CN 107 056 016 A describes a method of manufacturing a chalcogenide glass comprising melting a mixture of a sulfur-based raw material and an aluminum metal oxygen scavenger disposed in a crucible using induction heating, wherein a medium frequency induction coil heats an induction heating element made of a precious metal and the induction heating element conducts heat to the crucible. CN 108 726 850 A describes a method of manufacturing a glass comprising melting a disposed in a crucible using induction heating, wherein, when the glass is an oxide glass material, a crucible made of a high-temperature resistant metal material is heated by electromagnetic induction and the crucible directly heats and melts the material under the action of the induced magnetic field, or when the glass is a chalcogenide glass material, a crucible sleeve made of a high-temperature resistant metal material is used and under the action of an induced magnetic field, the crucible sleeve heats up and then heats the material in the crucible. WO 2006/088339 A1 describes a method for producing a glass melt, comprising the steps of feeding part of a predetermined total amount of a composition of glass materials into a melting furnace, said glass materials including a metal oxide selected from a group consisting of ZnO, P₂O₅, Bi₂O₃, and combinations thereof, placing carbon rings for ignition on the glass materials, adding the remaining amount of the glass materials to cover the carbon rings, melting the glass materials by applying a high frequency induction current to the melting furnace, and discharging a glass melt from the melting furnace, the glass melt resulting from melting of the glass materials.

### Summary of Invention

### Technical Problem

However, in the method described in JP 4109105 B, it is necessary to increase the temperature of the heater to a sufficiently high temperature, and further, it is necessary to increase the temperature of the glass components to a target temperature by the radiant heat from the heater. As such, it is difficult to increase the temperature at a sufficiently high speed.

Meanwhile, when decreasing the temperature of the glass components to a target temperature by, for example, switching the heater between ON and OFF, the glass components continue to be heated by the radiant heat from the heater for some time even if the heater is switched to OFF. As such, it is difficult to decrease the temperature at a sufficiently high speed.

An object of the present invention is to provide a glass manufacturing method in which temperature can be increased and decreased easily at a high speed and in which the productivity can be improved.

### Solution to Problem

The present invention provides a glass manufacturing method according to claim 1. Preferred embodiments are subject-matter of the dependent claims. A glass manufacturing method according to the present invention includes the steps of: making a melt by melting a raw material disposed in a container and obtaining a glass by cooling the melt, wherein the raw material contains a metal; in the step of making the melt from the raw material, the raw material is induction-heated.

The glass manufacturing method according to the present invention preferably further includes the step of stirring the melt, wherein the melt is stirred by a Lorentz force.

The glass manufacturing method according to the present invention preferably further includes the step of discharging the melt to outside of the container through a pipe, wherein the pipe is connected to the container and is provided with a plug in the pipe, and the plug is heated and melted to discharge the melt. In this case, the plug is more preferably a solidified product formed by cooling the melt in the pipe.

The glass is preferably a chalcogenide glass.

### Advantageous Effects of Invention

The present invention provides a glass manufacturing method in which temperature can be increased and decreased easily at a high speed and in which the productivity can be improved.

### Brief Description of Drawings

FIG. 1(a) to FIG. 1(c) are schematic perspective views illustrating the steps up to heating a raw material in a glass manufacturing method according to an embodiment of the present invention.
FIG. 2 (a) and FIG. 2 (b) are schematic perspective views illustrating the steps including and after stirring a melt in the glass manufacturing method according to an embodiment of the present invention.

### Description of Embodiments

A preferred embodiment will be described below. However, the following embodiment is merely an example, and the present invention is not limited to the following embodiment. Moreover, in the drawings, members having substantially the same functions may be referred to by the same reference numerals.

### Glass manufacturing method

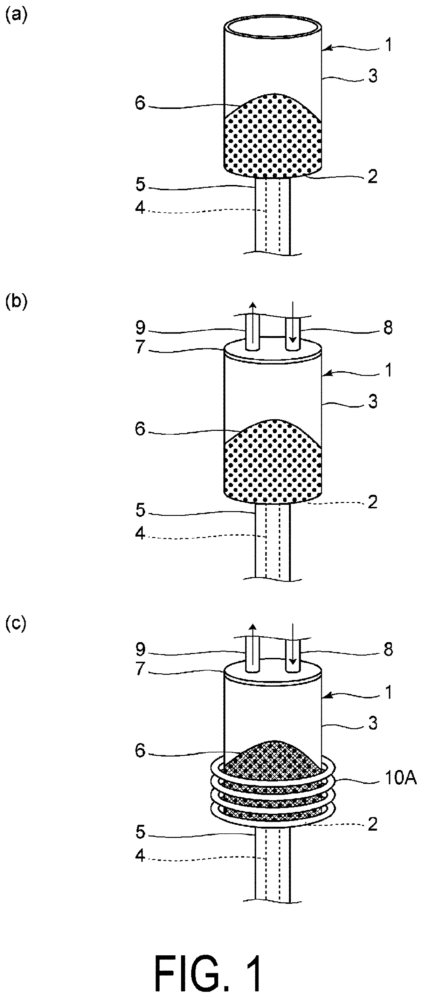

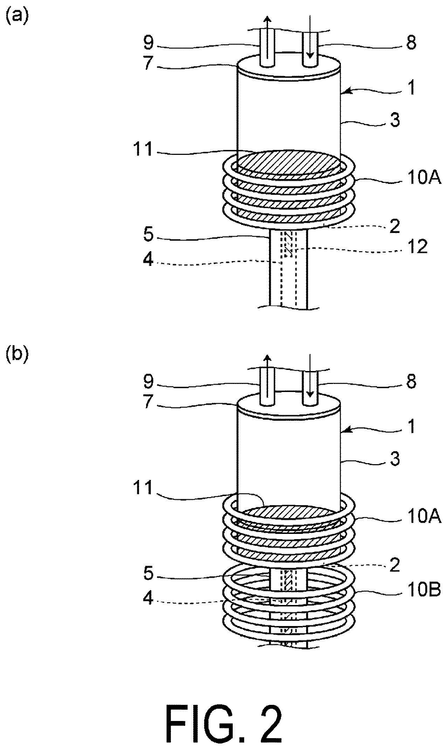

FIG. 1(a) to FIG. 1(c) are schematic perspective views illustrating the steps up to heating a raw material in a glass manufacturing method according to an embodiment of the present invention. FIG. 2 (a) and FIG. 2 (b) are schematic perspective views illustrating the steps including and after stirring a melt in the glass manufacturing method according to an embodiment of the present invention. For convenience, a coil 10A or a coil 10B is omitted in some drawings.

As an example of the present invention, the manufacturing method of the present embodiment is a method of manufacturing a chalcogenide glass. However, the method according to the present invention can also be applied to the manufacturing of glasses that are not chalcogenide glasses.

As illustrated in FIG. 1(a), in the present embodiment, a crucible is used as a container 1. The container 1 has a bottom portion 2 and a side wall portion 3. The container 1 is preferably made of quartz glass. This makes it possible to suitably form a glass in the following steps.

A pipe 4 is connected to the bottom portion 2 of the container 1. A pipe sleeve 5 is disposed surrounding the pipe 4. The pipe 4 passes through the inside of the pipe sleeve 5. In the present embodiment, the pipe sleeve 5 is made of Pt. However, the pipe sleeve 5 may be made of any suitable metal.

As illustrated in FIG. 1(a), a raw material 6 of glass is disposed inside the container 1. In the present embodiment, the raw material 6 is a mixture containing a component constituting a chalcogenide glass. In the present embodiment, the raw material 6 may contain any metal. Note that in the present invention, "metal" includes metal elements, metalloid elements, alkali metal elements, and alkaline earth metal elements, etc. Details of the raw material 6 will be described below. Note that preferably, a small amount of the raw material 6 is melted in advance to form a small amount of a melt 11, and the small amount of the melt 11 is discharged into the pipe 4. The small amount of the melt 11 is cooled in the pipe 4, resulting in a solidified product (solid glass). In this way, a plug 12 can be formed. As such, the raw material 6 can be disposed stably even when the pipe 4 is connected to the bottom portion 2 of the container 1.

Next, as illustrated in FIG. 1(b), a lid 7 is disposed on the side wall portion 3 of the container 1. A gas supply pipe 8 and a gas discharge pipe 9 are connected to the lid 7. Gas inside the container 1 is discharged through the gas discharge pipe 9, reducing pressure inside the container 1. Next, an inert gas or a reducing gas is supplied into the container 1 from the gas supply pipe 8. By repeating this, the inside of the container 1 is rendered into an inert atmosphere or a reducing atmosphere.

In forming a chalcogenide glass, it is necessary to prevent the heated raw material 6 from reacting with oxygen or moisture. In the present embodiment, since air inside the container 1 is replaced with an inert gas or a reducing gas, oxygen and moisture are removed from the container. Thus, a chalcogenide glass can be suitably formed even without the use of a sealed container kept in a vacuum state. In the present embodiment, as described below, the formed glass can be discharged from the pipe 4 to outside of the container 1; as such, the container 1 can be reused because it is not necessary to destroy the container 1 to remove the formed glass.

Meanwhile, as illustrated in FIG. 1(c), the coil 10A is disposed surrounding at least a part of the side wall portion 3 of the container 1. Specifically, the coil 10A is disposed surrounding a part of the side wall portion 3 corresponding to where the raw material 6 is disposed in the container 1. An electric current is applied to the coil 10A, and the raw material 6 is induction-heated. Specifically, an electric current is applied to the coil 10A, generating an induced magnetic field which in turn generates an induced current. The raw material 6 contains a metal, which has an internal resistance. As such, due to the induced current flowing into the metal, the metal contained in the raw material 6 becomes a heat source, heating the entire raw material 6. By this induction-heating, the raw material 6 is turned into the melt 11 as illustrated in FIG. 2(a).

The application of electric current to the coil 10A generates an induced magnetic field and an induced current, resulting in a Lorentz force being applied to the melt 11. The Lorentz force can stir the melt 11. As such, in the present embodiment, the melt 11 can be stirred without using a means, such as a stirrer, that stirs the melt 11 by bringing a member into direct contact with the melt 11. However, a stirrer or the like may be used to stir the melt 11.

As described above, a portion of the melt 11 is discharged into the pipe 4. The melt 11 in the pipe 4 is cooled and becomes a solidified product (solid glass). In this way, the plug 12 is formed. As such, a small amount of the melt 11 that forms the plug 12 is discharged into the pipe 4, but the discharge of the rest of the melt 11 is stopped by the plug 12. However, a lid, a plunger, or the like may be used instead of the plug 12.

As illustrated in FIG. 2(b), the coil 10B is disposed surrounding the pipe sleeve 5. An electric current is applied to the coil 10B, and the pipe sleeve 5 is induction-heated. The pipe 4 and the plug 12 in the pipe 4 is heated by radiant heat from the pipe sleeve 5. Note that the plug 12 is a solid glass and does not contain an elemental metal and an alloy, and thus is not susceptible to induction-heating. The above heating causes the plug 12 to melt, and the melt 11 is discharged from the container 1.

The discharged melt 11 flows into a suitable mold, for example. The melt 11 is then cooled in the mold, forming a glass.

A feature of the present embodiment is that, the raw material 6 contains a metal, and the raw material 6 is melted by induction-heating. By adjusting the current applied to the coil 10A, the degree of heat build-up in the metal contained in the raw material 6 or the melt can be adjusted, and the temperature of the raw material 6 or the melt 11 can be directly adjusted. As such, it is possible to increase or decrease the temperature more easily and faster than the conventional radiation heating. Therefore, productivity can be increased.

As illustrated in FIG. 2(a), the melt 11 is preferably stirred by the Lorentz force. When the melt 11 is stirred by the Lorentz force without using a member for stirring, a member for stirring does not come into contact with the melt 11. As such, the melt 11 is less likely to be contaminated. Therefore, the resulting glass can have an increased purity.

The pipe 4 may not necessarily be connected to the container 1. However, since the pipe 4 is connected to the container 1, the melt 11 can be easily discharged without the orientation of the container 1 being changed.

The plug 12 in the pipe 4 is preferably formed of a solidified product obtained by cooling the melt 11 in the pipe 4. This makes it possible to stop the discharge of the melt 11 without the use of a member such as a plunger or a lid. As such, a member such as a lid or a plunger does not come into contact with the melt 11, and the melt 11 is less likely to be contaminated. Therefore, the resulting glass can have an increased purity.

Note that when a member such as a plunger or a lid is used, it is necessary to dispose a member having a size that plugs the pipe 4 without any gaps at a correct position. As such, high precision is required for the size and positioning of the member. In comparison, the plug 12 is formed of a solidified product obtained by cooling the melt 11 that has been discharged into the pipe, and thus the plug 12 can plug the pipe 4 more reliably and easily.

The proportion of the materials contained in the raw material 6 of the present embodiment is adjusted to give the resulting glass the following composition. In the description of the composition of the glass, "%" means "mol%". Note that, for example, the sum of the contents of A, B, and C may be referred to as "content of A + B + C" or "A + B + C".

A glass formed according to the method of the present embodiment contains greater than 0 mol% and 50 mol% or less of Ge, greater than 0 mol% and 50 mol% or less of Ga, from 30 mol% to 90 mol% of Te, from 0 mol% to 40 mol% of Ag + Al + Ti + Cu + In + Sn + Bi + Cr + Zn + Mn, and from 0 mol% to 50 mol% of F + Cl + Br + I in the glass composition.

Ge is a component for forming a glass network. Ge is also a metalloid. The content of Ge is greater than 0% and 50% or less, preferably from 2% to 40%, more preferably from 4% to 35%, even more preferably from 5% to 30%, further more preferably from 7% to 25%, and still more preferably from 10% to 20%. When the content of Ge is too small, vitrification becomes difficult. Meanwhile, when the content of Ge is too large, Ge-based crystal tends to precipitate, and raw material costs tend to be high.

Ga is a component for increasing thermal stability (stability of vitrification) of glass. Also, Ga is a metal element. The content of Ga is greater than 0% and 50% or less, preferably from 1% to 45%, more preferably from 2% to 40%, even more preferably from 4% to 30%, further more preferably from 5% to 25%, and still more preferably from 10% to 20%. When the content of Ga is too small, vitrification becomes difficult. Meanwhile, when the content of Ga is too large, Ga-based crystal is easy to precipitate, and raw material costs tend to be high.

Te, which is a chalcogen element, is a component essential for forming a glass network. Te is also a metalloid element. The content of Te is from 30% to 90%, preferably from 40% to 89%, more preferably from 50% to 88%, even more preferably from 60% to 86%, and further more preferably from 70% to 85%. When the content of Te is too small, vitrification becomes difficult. Meanwhile, when the content of Te is too large, Te-based crystal is easy to precipitate.

Ag + Al + Ti + Cu + In + Sn + Bi + Cr + Zn + Mn are metal elements. Glass can have an increased thermal stability by containing the above metal elements. The content of Ag + Al + Ti + Cu + In + Sn + Bi + Cr + Zn + Mn is from 0% to 40%, preferably greater than 0% and 30% or less, more preferably greater than 0% and 20% or less, and even more preferably from 0.1% to 10%. When the content of Ag + Al + Ti + Cu + In + Sn + Bi + Cr + Zn + Mn is too small or too large, vitrification becomes difficult. Note that the individual content of each of Ag + Al + Ti + Cu + In + Sn + Bi + Cr + Zn + Mn is from 0% to 40%, preferably from 0% to 30% (with at least one component being greater than 0%), and more preferably from 0% to 20% (with at least one component being greater than 0%), and even more preferably from 0.1% to 10%. Of these, it is preferable to use Ag and/or Sn from the perspective that the effect of increasing thermal stability of glass is particularly great.

In addition to the above components, the glass formed in the present embodiment may contain the following components.

F, Cl, Br, and I are also components that increase thermal stability of glass. A content of F, Cl, Br, and I is from 0% to 50%, preferably from 1% to 40%, more preferably from 1% to 30%, even more preferably from 1% to 25%, and particularly preferably from 1% to 20%. When the content of F + Cl + Br + I is too large, vitrification becomes difficult, and weather resistance tends to be weak. Note that the individual content of each of F, Cl, Br, and I is from 0% to 50%, preferably from 1% to 40%, more preferably from 1% to 30%, even more preferably from 1% to 25%, and particularly preferably from 1% to 20%. Of these, it is preferable to use I because the element raw material can be used and the effect of increasing glass stability is particularly great.

The inclusion of Si, Sb, and Cs results in an increased thermal stability. Here, Si and Sb are metalloids. Si + Sb + Cs is preferably from 0% to 40%, more preferably from 0% to 30%, even more preferably from 0% to 20%, and further more preferably from 0.1% to 10%.

S is a component that widens the vitrification range and tends to improve thermal stability of glass. A content of S is preferably from 0% to 30%, more preferably from 0% to 20%, even more preferably from 0% to 10%, and particularly preferably from 0% to 3%. When the content of S is too large, transmittance of infrared rays having a wavelength of 10 µm or greater tends to be small.

Se and As are components that widen the vitrification range and improve thermal stability of glass. An individual content of each of Se and As is preferably from 0% to 10%, more preferably from 0.5% to 5%. However, since these substances are toxic, the glass is preferably substantially free of Se and As from the viewpoint of reducing the effects on the environment and the human body, as described above.

Note that the glass is preferably substantially free of Cd, Tl, and Pb, which are toxic substances.

A proportion of the metal in the raw material 6 is 80 vol% or greater, preferably 85 vol% or greater, and particularly preferably 90 vol% or greater. In this way, the raw material 6 can be easily melted by induction-heating. As such, it is possible to increase or decrease the temperature more easily and faster than the conventional radiation heating, and productivity can be increased. An upper limit of the proportion of the metal in the raw material 6 is not limited, but may be, for example, 100 vol% or less, 99 vol% or less, and particularly 98 vol% or less.

### Reference Signs List

1 Container
2 Bottom portion
3 Side wall portion
4 Pipe
5 Pipe sleeve
6 Raw material
7 Lid
8 Gas supply pipe
9 Gas discharge pipe
10A Coil 10B Coil
11 Melt
12 Plug

## Claims

1. A glass manufacturing method, comprising the steps of:
making a melt (11) by melting a raw material (6) disposed in a container (1); and
obtaining a glass by cooling the melt (11), wherein
the raw material (6) contains a metal material selected from the group consisting of metal elements, metalloid elements, alkali metal elements, and alkaline earth metal elements,
a proportion of the metal material in the raw material (6) is 80 vol% or greater, and
in the step of making the melt (11) from the raw material (6), the raw material (6) is induction-heated, wherein due to the induced current flowing into the metal material, the metal material contained in the raw material (6) becomes a heat source, heating the entire raw material (6).

2. The glass manufacturing method according to claim 1, further comprising the step of stirring the melt (11), wherein
the melt (11) is stirred by a Lorentz force.

3. The glass manufacturing method according to claim 1 or 2, further comprising the step of discharging the melt (11) to outside of the container (11) through a pipe (4), wherein the pipe (4) is connected to the container (1) and is provided with a plug (12) in the pipe (4), and
the plug (12) is heated and melted to discharge the melt (11).

4. The glass manufacturing method according to claim 3, wherein the plug (12) is a solidified product formed by cooling the melt (11) in the pipe (4).

5. The glass manufacturing method according to any one of claims 1 to 4, wherein the glass is a chalcogenide glass.

6. The glass manufacturing method according to any one of claims 1 to 5, wherein the container (1) is made of quartz glass.

## Patentansprüche

1. Glasherstellungsverfahren, umfassend die Schritte:
Herstellen einer Schmelze (11) durch Schmelzen eines in einem Behälter (1) befindlichen Rohmaterials (6) und
Gewinnen von Glas durch Abkühlen der Schmelze (11), wobei
das Rohmaterial (6) ein Metallmaterial enthält, das aus der Gruppe ausgewählt ist, die aus Metallelementen, Halbmetallelementen, Alkalimetallelementen und Erdalkalimetallelementen besteht,
der Anteil des Metallmaterials im Rohmaterial (6) 80 Vol.-% oder mehr beträgt und
im Schritt des Herstellens der Schmelze (11) aus dem Rohmaterial (6) das Rohmaterial (6) induktiv erwärmt wird, wobei das im Rohmaterial (6) enthaltene Metallmaterial aufgrund des in das Metallmaterial fließenden Induktionsstroms zu einer Wärmequelle wird, die das gesamte Rohmaterial (6) erwärmt.

2. Glasherstellungsverfahren nach Anspruch 1, ferner umfassend den Schritt des Rührens der Schmelze (11), wobei die Schmelze (11) durch eine Lorentzkraft gerührt wird.

3. Glasherstellungsverfahren nach Anspruch 1 oder 2, ferner umfassend den Schritt des Ausbringens der Schmelze (11) aus dem Behälter (1) durch ein Rohr (4), wobei das Rohr (4) mit dem Behälter (1) verbunden ist und im Rohr (4) ein Stopfen (12) vorgesehen ist, und
der Stopfen (12) erwärmt und geschmolzen wird, um die Schmelze (11) auszubringen.

4. Glasherstellungsverfahren nach Anspruch 3, wobei der Stopfen (12) ein erstarrtes Produkt ist, das durch Abkühlen der Schmelze (11) im Rohr (4) gebildet wurde.

5. Glasherstellungsverfahren nach einem der Ansprüche 1 bis 4, wobei das Glas ein Chalkogenidglas ist.

6. Glasherstellungsverfahren nach einem der Ansprüche 1 bis 5, wobei der Behälter (1) aus Quarzglas besteht.

## Revendications

1. Procédé de fabrication de verre, ledit procédé comprenant les étapes consistant :
à fabriquer une masse fondue (11) par fusion d'une matière première (6) disposée dans un récipient (1) ; et
à obtenir un verre en refroidissant la masse fondue (11), procédé dans lequel :
la matière première (6) contient un matériau métallique sélectionné parmi le groupe se composant d'éléments métalliques, d'éléments métalloïdes, d'éléments métalliques alcalins et d'éléments de métaux alcalino-terreux,
une proportion du matériau métallique contenu dans la matière première (6) est égale ou supérieure à 80 % en volume, et
au cours de l'étape de fabrication de la masse fondue (11) à partir de la matière première (6), la matière première (6) est chauffée par induction, procédé dans lequel sous l'effet du courant induit circulant dans le matériau métallique, le matériau métallique contenu dans la matière première (6) devient une source de chaleur chauffant la totalité de la matière première (6).

2. Procédé de fabrication de verre selon la revendication 1, comprenant en outre l'étape consistant à brasser la masse fondue (11), procédé dans lequel :
la masse fondue (11) est brassée par une force de Lorentz.

3. Procédé de fabrication de verre selon la revendication 1 ou 2, comprenant en outre l'étape consistant à évacuer, à travers un tuyau (4), la masse fondue (11) à l'extérieur du récipient (1), procédé dans lequel le tuyau (4) est relié au récipient (1) et est doté d'un bouchon (12) placé dans le tuyau (4), et
le bouchon (12) est chauffé et fondu pour évacuer la masse fondue (11).

4. Procédé de fabrication de verre selon la revendication 3, dans lequel le bouchon (12) est un produit solidifié formé en refroidissant la masse fondue (11) contenue dans le tuyau (4).

5. Procédé de fabrication de verre selon l'une quelconque des revendications 1 à 4, dans lequel le verre est un verre de chalcogénure.

6. Procédé de fabrication de verre selon l'une quelconque des revendications 1 à 5, dans lequel le récipient (1) est en verre de quartz.
